(19) Europäisches Patentamt
European Patent Office
Office européen des brevets

(11) **EP 4 140 838 B1**

(12) **EUROPEAN PATENT SPECIFICATION**

(45) Date of publication and mention
of the grant of the patent:
**23.04.2025  Bulletin 2025/17**

(21) Application number: **22191866.7**

(22) Date of filing: **24.08.2022**

(51) International Patent Classification (IPC):
***B60T 8/172*** *(2006.01)*    ***B60C 23/04*** *(2006.01)*
***B60W 40/06*** *(2012.01)*

(52) Cooperative Patent Classification (CPC):
**B60T 8/172; B60C 23/0408; B60W 40/06;**
B60T 2210/12

(54) **ROAD CONDITION MONITORING SYSTEM AND METHOD**

STRASSENZUSTANDSÜBERWACHUNGSSYSTEM UND -VERFAHREN

SYSTÈME ET PROCÉDÉ DE SURVEILLANCE DE L'ÉTAT D'UNE ROUTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.08.2021   US 202163238274 P**
**18.08.2022   US 202217820653**

(43) Date of publication of application:
**01.03.2023   Bulletin 2023/09**

(73) Proprietor: **The Goodyear Tire & Rubber
Company
Akron, OH 44316 (US)**

(72) Inventors:
• **SINGH, Kanwar Bharat
7363 Lorentzweiler (LU)**
• **NOURI, Arash
Blacksburg 24060 (US)**
• **SCHAEFER-O'REILLY, Sven
7766 Bissen (LU)**

(74) Representative: **Kutsch, Bernd
Goodyear S.A.
Patent Department
Avenue Gordon Smith
7750 Colmar-Berg (LU)**

(56) References cited:
EP-A1- 2 927 066        WO-A1-2014/199328
DE-A1- 102010 048 927   DE-A1- 102016 203 545
DE-A1- 102017 222 812   DE-C1- 4 329 745
US-A1- 2013 211 741     US-A1- 2015 166 072
US-A1- 2019 329 788

**Description**

<u>Field of the Invention</u>

The invention relates generally to vehicle and tire monitoring systems and methods. More particularly, the invention relates to systems and methods that measure and collect vehicle and tire data. The invention is directed to a system and a method that employs vehicle and tire data to determine the local slip of a tire and estimate a road condition in real time.

<u>Background of the Invention</u>

The condition of the road on which a vehicle is traveling affects performance of the vehicle and the tires that support the vehicle. As a result, it is beneficial to determine the condition of the road as the vehicle travels. If the road condition can be determined, the condition may be employed in a vehicle control system to improve handling and performance of the vehicle. However, accurate and reliable detection of road conditions for use by such systems has been difficult to achieve.

In the prior art, there has been a common belief that a tire under a free rolling or cruising condition experiences little to no slip. Slip is the relative motion between the tire and the road surface. A free rolling or cruising condition is experienced when the vehicle supported by the tire is driven at a constant speed on a straight road, so that the tire experiences low or no forces from acceleration, deceleration, or cornering.

However, it has been determined that a tire does experience quantifiable local slip during free rolling or cruising conditions. It has also been determined that quantification of local slip of the tire during free rolling or cruising conditions may enable the condition of the road surface to be estimated, which may then be employed in vehicle control systems. By way of example, a vehicle control system may include brake control systems, suspension control systems, steering control systems, and the like. Such vehicle control systems may be employed on any vehicle, including driver-operated vehicles, driver-assisted vehicles, and autonomous vehicles.

Quantification of local slip of the tire during free rolling or cruising conditions may be accomplished by measuring slip with a high frequency accelerometer mounted in the tire. However, a high frequency accelerometer is a specialized sensor that is costly to install in a tire. Therefore, direct measurement of local slip of the tire during free rolling or cruising conditions is not an economically viable manner of quantifying slip.

As a result, there is a need in the art for a system that accurately and reliably estimates the slip of a tire during free rolling or cruising conditions in an economical manner, which in turn enables estimation of a road condition in real time.

WO 2014/199328 A1 describes a method and system for estimating the potential friction between a vehicle tire and a rolling surface.

<u>Summary of the Invention</u>

The invention relates to a system in accordance with claim 1 and to a method in accordance with claim 14.

Dependent claims refer to preferred embodiments of the invention.

According to a preferred aspect of the invention, a road condition monitoring system for a vehicle is provided. The vehicle is supported by at least one tire and includes a central communication system. The system includes a processor in electronic communication with the central communication system. An identifier that is in electronic communication with the processor receives vehicle condition data from the central communication system and identifies a free rolling instance of the at least one tire. A slip estimator that is in electronic communication with the processor receives speed data from the central communication system and determines slip characteristics of the at least one tire during the free rolling instance. A classifier that is in electronic communication with the processor receives the slip characteristics of the at least one tire and identifies a road surface condition from the slip characteristics.

<u>Brief Description of the Drawings</u>

The invention will be described by way of example and with reference to the accompanying drawings, in which:

Figure 1 is a perspective view of an exemplary vehicle and tire employing the road condition monitoring system of the present invention;

Figure 2 is a plan view of the vehicle shown in Figure 1, with certain portions of the vehicle represented by dashed lines;

Figure 3 is a schematic diagram of the vehicle shown in Figure 1 with a representation of data transmission to a cloud-based server and to a user device;

Figure 4 is a graphical representation of a tire force curve showing a free rolling zone;

Figure 5 is a first schematic diagram of an exemplary embodiment of a system for estimating a road condition of the present invention;

Figure 6 is a second schematic diagram of the exemplary embodiment of the system for estimating a road condition of the present invention showing estimation of a reference value for tire slip;

Figure 7 is a graphical representation of temperature versus relative humidity from Figure 6; and

Figure 8 is a third schematic diagram of the exemplary embodiment of the system for estimating a road condition of the present invention.

Similar numerals refer to similar parts throughout the drawings.

Definitions

"Axial" and "axially" means lines or directions that are parallel to the axis of rotation of the tire.

"CAN bus" or "CAN bus system" is an abbreviation for controller area network system, which is a vehicle bus standard designed to allow microcontrollers and devices to communicate with each other within a vehicle without a host computer. CAN bus is a message-based protocol, designed specifically for vehicle applications.

"Circumferential" means lines or directions extending along the perimeter of the surface of the annular tread perpendicular to the axial direction.

"Equatorial centerplane (CP)" means the plane perpendicular to the tire's axis of rotation and passing through the center of the tread.

"Footprint" means the contact patch or area of contact created by the tire tread with a flat surface as the tire rotates or rolls.

"Inboard side" means the side of the tire nearest the vehicle when the tire is mounted on a wheel and the wheel is mounted on the vehicle.

"Lateral" means an axial direction.

"Lateral edges" means a line tangent to the axially outermost tread contact patch or footprint of the tire as measured under normal load and tire inflation, the lines being parallel to the equatorial centerplane.

"Net contact area" means the total area of ground contacting tread elements between the lateral edges around the entire circumference of the tread of the tire divided by the gross area of the entire tread between the lateral edges.

"Outboard side" means the side of the tire farthest away from the vehicle when the tire is mounted on a wheel and the wheel is mounted on the vehicle.

"Radial" and "radially" means directions radially toward or away from the axis of rotation of the tire.

"Rib" means a circumferentially extending strip of rubber on the tread which is defined by at least one circumferential groove and either a second such groove or a lateral edge, the strip being laterally undivided by full-depth grooves.

"Slip" is the relative motion between the tire and the road surface.

"Slip angle" is the angle between a vehicle's direction of travel and the direction in which the front wheels are pointing. Slip angle is a measurement of the deviation between the plane of tire rotation and the direction of travel of a tire.

"Tread element" or "traction element" means a rib or a block element defined by a shape having adjacent grooves.

"Tread Arc Width" means the arc length of the tread of the tire as measured between the lateral edges of the tread.

Detailed Description of Preferred Embodiments of the Invention

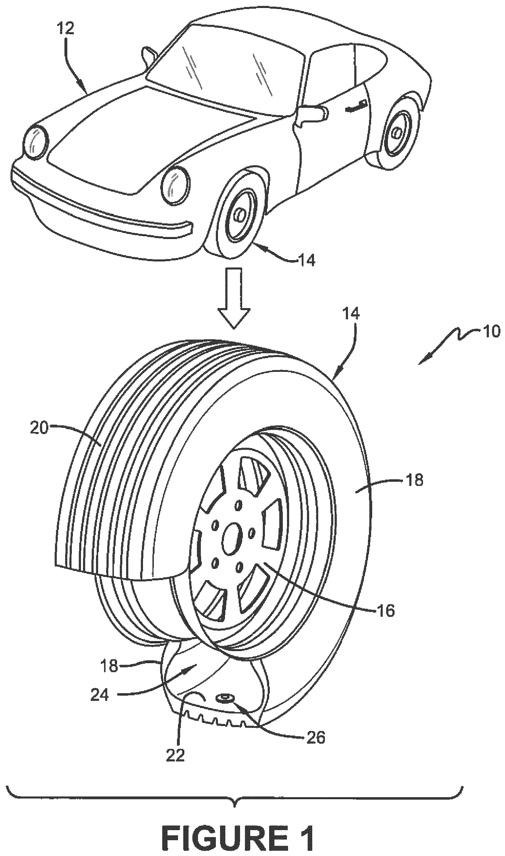

An exemplary embodiment of the road condition monitoring system 10 of the present invention is shown in Figures 1 through 8. Turning to Figure 1, a vehicle 12 is supported by tires 14. While the vehicle 12 is depicted as a passenger car, the invention is not to be so restricted. The principles of the invention find application in other vehicle categories such as commercial trucks in which vehicles may be supported by more or fewer tires than shown in Figure 1.

The tires 12 are of conventional construction, and each tire is mounted on a respective wheel 16 as known to those skilled in the art. Each tire 14 includes a pair of sidewalls 18 that extend to a circumferential tread 20. An innerliner 22 is disposed on the inner surface of the tire 14, and when the tire is mounted on the wheel 16, an internal cavity 24 is formed, which is filled with a pressurized fluid, such as air.

A sensor unit 26 preferably is mounted to each tire 14, preferably by attachment to the innerliner 22 by means such as an adhesive. The sensor unit 26 measures certain characteristics of the tire 14, including tire pressure and temperature. For this reason, the sensor unit 26 preferably includes a pressure sensor and a temperature sensor, and may be of any known configuration, such as a tire pressure management system (TPMS) sensor, and will be referred to as a TPMS sensor unit or a TPMS sensor. The TPMS sensor unit 26 preferably also includes electronic memory capacity for storing identification (ID) information for each tire 14, known as tire ID information. It is to be understood that the TPMS sensor unit 26 may be a single unit, or may include more than one unit, and the sensor unit may be mounted on a structure of the tire 14 other than the innerliner 22.

The tire ID information may include or be correlated to specific data for each tire 14, including: a position of the tire on the vehicle 12; tire size, such as rim size, width, and outer diameter; tire type, such as all weather, summer, winter, off-the-road, and the like; tire segment, which is the specific product line to which the tire belongs; predetermined traction or weather parameters, such as a three-peak snowflake indicator for winter tires (3PSF); Department of Transportation (DOT) code; wet grip index, which is a predetermined value based on a standardized test; tire model; manufacturing location; manufacturing date; treadcap code, which includes or correlates to a compound identification; a mold code that includes or correlates to a tread structure identification; a tire footprint shape factor (FSF); a mold design drop; a tire belt/breaker angle; and/or an overlay material. The tire ID information 32 may also correlate to a service history or other information to identify specific features and parameters of each tire 14, as well as mechanical characteristics of the tire, such as cornering parameters, spring rate, load-inflation relationship, and the like.

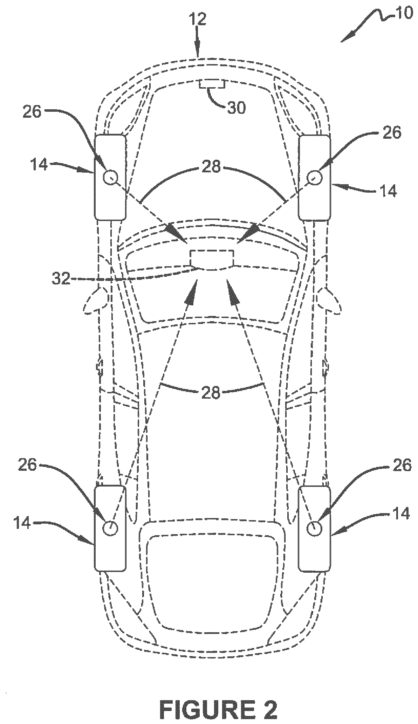

Referring to Figure 2, the vehicle 12 includes a central communication system 28 that enables electronic communication with the TPMS sensor units 26 and sensors 30 that are mounted on the vehicle, and may be a wired or a wireless system. By way of example, reference shall be made to a CAN bus system 28, with the understanding that such reference includes any central electronic communication system for a vehicle, whether it is physically incorporated into the vehicle 12 or is cloud-based. Aspects of the road condition monitoring system 10 preferably are executed on a processor 32 that is accessible through the vehicle CAN bus 28. The CAN bus 28 enables the processor 32, and accompanying memory, to receive input of data from the sensors 26 and 30 and to interface with other electronic components, as will be described in greater detail below.

As mentioned above, it is beneficial to determine the condition of the road over which the vehicle 12 travels. If the road condition can be determined, the condition may be employed in a vehicle control system through the vehicle CAN bus 28 to improve handling and performance of the vehicle 12. It has been determined that quantification of slip of the tire 14 during free rolling or cruising conditions may enable the condition of the road surface to be estimated. However, quantification by direct measurement of slip of the tire 14 during free rolling or cruising conditions is not economically viable.

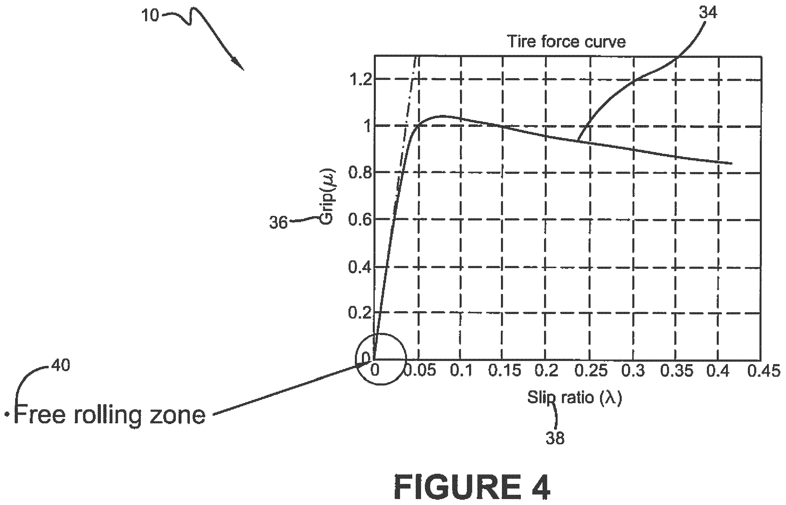

The road condition monitoring system 10 determines a road condition using an indirect technique, which employs standard vehicle sensors 26 and 30 to capture local slip behavior of the tire 14 during free rolling or cruising conditions. For the purpose of convenience, reference hereinafter shall be made to free rolling conditions, free rolling state, and free rolling instance, with the understanding that such reference includes cruising conditions, cruising state, and cruising instance, respectively. Figure 4 shows a tire force curve 34, which plots tire grip 36 versus tire slip ratio 38, and shows a free rolling zone 40. The free rolling zone 40 exists when the tire 14 is in free rolling conditions or a free rolling state.

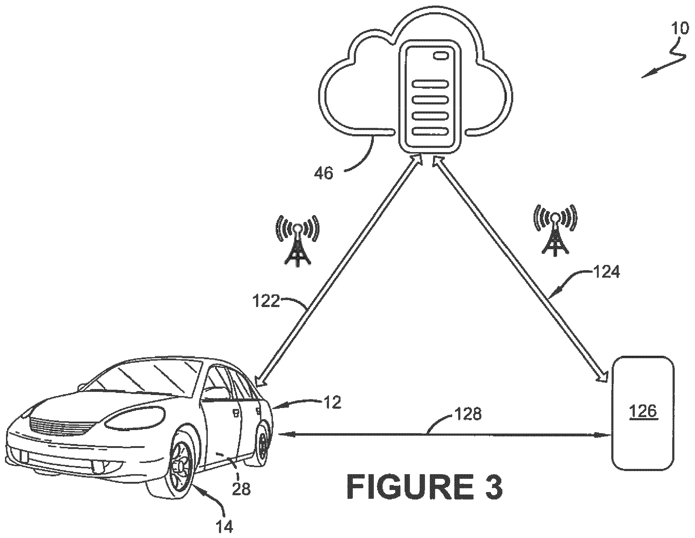

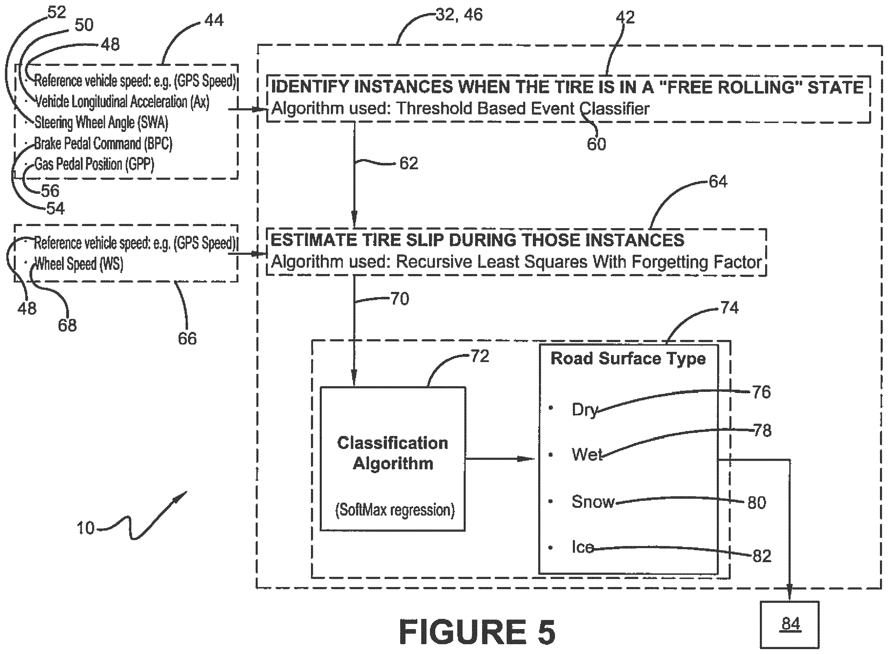

With reference to Figure 5, the road condition monitoring system 10 includes an identifier 42 that identifies when the tire 14 is in a free rolling state. The identifier 42 receives vehicle condition data 44 from the CAN bus system 28 (Figure 2). The identifier 42 may be stored on the local vehicle-mounted processor 32 or on a remote Internet or cloud-based processor 46 (Figure 3), as will be described below. The vehicle condition data 44 includes a vehicle reference speed 48 that may be from a global positioning system (GPS), a vehicle longitudinal acceleration 50, a steering wheel angle 52, a brake pedal command 54, and/or a gas pedal position 56. The vehicle condition data 44 is electronically communicated from the CAN bus system 28 to the processor 32 or 46, and is input into the identifier 42.

The identifier 42 preferably includes a threshold based event classifier 60, which analyzes the vehicle condition data 44. For example, the event classifier 60 may be a linear classifier, nonlinear classifier, or a Bayesian statistical classifier. The vehicle condition data 44 are input into respective categories, and predetermined thresholds have been set for each vehicle condition. When the predetermined thresholds are met, the tire 14 is classified as being in a free rolling state. For example, when the vehicle reference speed 48 is constant, the vehicle longitudinal acceleration 50 is minimal, the steering wheel angle 52 is constant, the brake pedal command 54 is minimal or zero, and the gas pedal position 56 is constant, the tire 14 is classified as being in a free rolling state, which in turn identifies a free rolling instance 62.

When a free rolling instance 62 is identified by the identifier 42, the road condition monitoring system 10 determines slip characteristics of the tire 14 during the free rolling instance. For example, a slip estimator 64 may be employed to estimate the slip of the tire 14 during the free rolling instance 62. The slip estimator 64 may be stored on the local vehicle-mounted processor 32 or on the remote Internet or cloud-based processor 46. The slip estimator 64 is in electronic communication with the CAN bus system 28 and receives speed data 66 from the CAN bus system. The speed data 66 includes the vehicle reference speed 48 that may be from a global positioning system (GPS) in kilometers per hour (kph) or miles per hour (mph), and a wheel speed 68, which is the speed of the wheel 16 on which the tire 14 is mounted, in kph or mph. The slip estimator 64 estimates tire slip 70 as a percentage difference between the wheel speed 68 and the vehicle speed 48:

$$\text{Tire Slip (\%)} = \frac{\text{Wheel Speed (kph)} - \text{Vehicle Reference Speed (kph)}}{\text{Wheel Speed (kph)}} \times 100\%$$

Preferably, the slip estimator 64 employs a recursive least squares algorithm with a forgetting factor, which is a recursive application of a least squares regression algorithm that enables each new data point to be taken into account. The forgetting factor provides less weight to older data points, thereby ensuring that the tire slip estimation 70 is based on the most recent data and thus is a real time estimation.

When the slip characteristic of the tire 14 is the tire slip estimation 70 as determined by the slip estimator 64, a classifier 72 that is in electronic communication with the slip estimator receives the tire slip estimation and identifies a road surface condition 74. The classifier 72 may be stored on the local vehicle-mounted processor 32 or on the remote Internet or cloud-based processor 46. In such a case, the classifier 72 identifies the road surface condition 74 based on the magnitude of the estimated tire slip 70. Preferably, the classifier 72 employs a multinomial logistic regression classification methodology, such as a softmax regression, to identify the road surface condition 74. The multinomial logistic regression classification methodology is preferred based on its capability to predict the probabilities of different outcomes of a categorically distributed dependent variable when given a set of independent variables.

The road surface condition 74 identified by the classifier 72 preferably is output by road surface type. For example, the road surface condition 74 may include a dry surface 76, a wet surface 78, a snow-covered surface 80, an icy surface 82, and/or variations and combinations thereof. The road surface condition 74 may then be output from the road condition monitoring system 10 and input through the CAN bus system 28 into vehicle control systems and/or into other discrete estimation systems 84. For example, the road surface condition 74 may be input into a tire grip estimation system that employs a technique shown and described in U.S. Patent Application Publication No. 2021/0229670.

It has been discovered that the tire slip estimation 70 from the slip estimator 64 may not be as consistently accurate as desired due to variation in the radius of the tire 14. Such variation may stem from expansion of the tire 14 during operation of the vehicle 12, aging of the tire, and/or wear of the tire. When the tire slip estimation 70 is not as consistently accurate as desired, the identification of the road surface condition 74 by the classifier 72 may be less accurate than is desired.

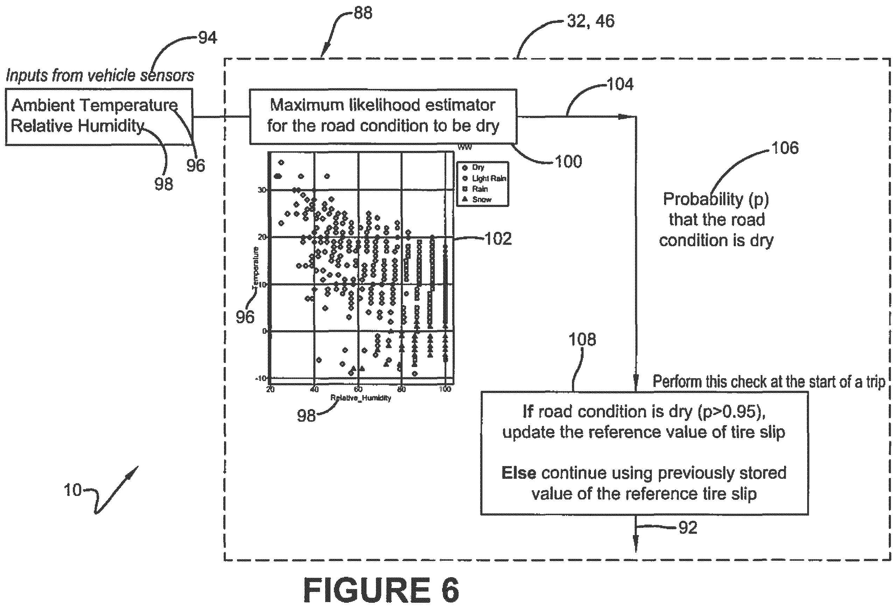

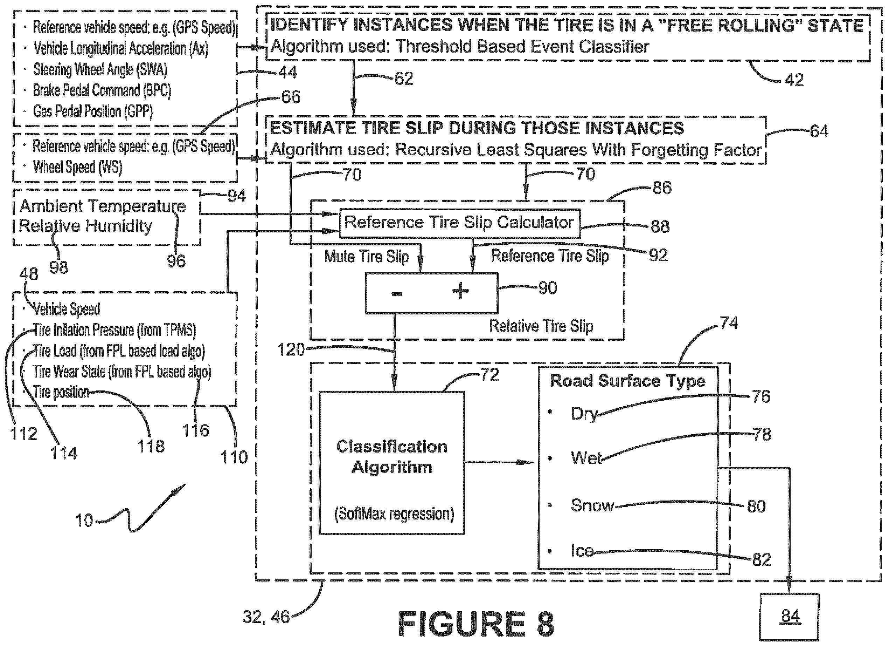

Turning to Figures 6 and 8, the road condition monitoring system 10 may determine other slip characteristics of the tire 14 to adjust the tire slip estimation 70 and account for variation in the radius of the tire 14. For example, a correction to the tire slip estimation 70 may be made by estimating a relative change in slip. The estimation of relative change in slip of the tire 14 is performed by a slip adjustor 86. The slip adjustor 86 preferably includes a reference slip calculator 88 and a relative slip calculator 90.

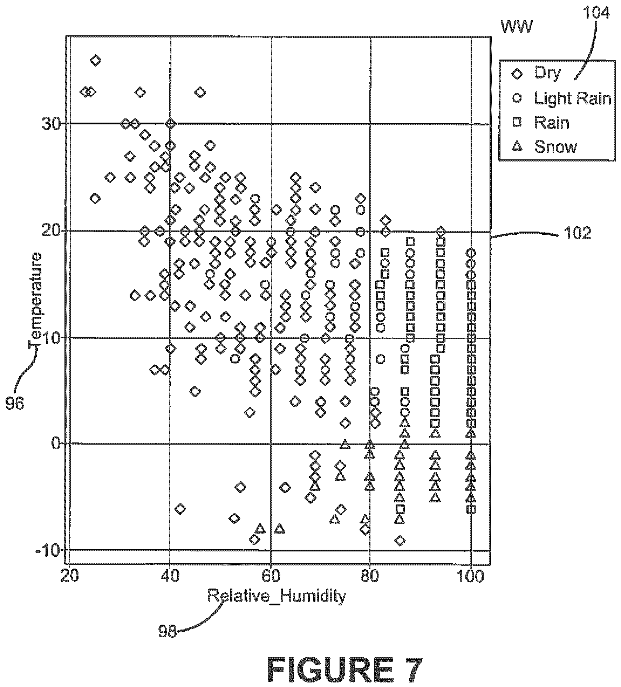

The reference slip calculator 88 estimates a reference slip value 92. The reference slip calculator 88 receives vehicle atmospheric condition data 94 from the CAN bus system 28, which preferably includes an ambient temperature 96 and a relative humidity 98. A dry road condition estimator 100 analyzes the atmospheric condition data 94 to determine if the road on which the vehicle 12 is traveling is dry. For example, with additional reference to Figure 7, the received ambient temperature 94 and the received relative humidity 98 may be plotted 102 against one another. When the plot 102 indicates a dry road condition 104, the estimator 100 generates a probability 106 of road dryness. When the probability 106 is greater than a predetermined probability threshold 108, such as about 0.95, the most recent tire slip estimation 70 from the slip estimator 64 is used as the reference slip value 92. When the probability 106 is less than the predetermined probability threshold 108, a prior tire slip estimation 70 that was used as the reference slip value 92 is retained as the reference slip value.

Returning to Figure 8, the road condition monitoring system 10 preferably also analyzes vehicle speed 48 and tire-related data 110 to account for short term variations in tire conditions that may affect tire slip, thereby increasing the robustness of the system. The tire-related data 110 preferably includes tire pressure 112 as measured by the TPMS sensor 26, a load 114 on the tire 14, a wear state 116 of the tire, and/or a position 118 of the tire on the vehicle 12. The tire load 114 may be measured by a load sensor, or may be calculated by a load estimation technique, such as the one shown and described in U.S. Patent No. 10,245,906. The tire wear state 116 may be measured by a wear sensor, or may be calculated by a wear estimation technique, such as the one shown and described in U.S. Patent Application Publication No. 2021/0061022 A1. The tire position 118 may be input from a sensor or from the above-described tire ID information, or may be calculated by a location technique, such as the one shown and described in U.S. Patent Application No. 2022/0230481 A1.

The vehicle speed 48 and tire-related data 110 are input into the reference slip calculator 88 to improve the estimation of the reference slip value 92 by employing thresholds or ranges in a manner similar to that as described above. For example, when the vehicle speed 48 is inside of a predetermined optimum range, the most recent tire slip estimation 70 from the slip estimator 64 is used as the reference slip value 92. When the vehicle speed 48 is outside of the predetermined optimum range, a prior tire slip estimation 70 that was used as the reference slip value 92 is retained as the reference slip value. When the tire pressure 112 is above a predetermined minimum threshold, the most recent tire slip estimation 70 from the slip estimator 64 is used as the reference slip value 92. When the tire pressure 112 is below the predetermined minimum threshold, a prior tire slip estimation 70 that was used as the reference slip value 92 is retained as the reference slip value.

When the tire load 114 is below a predetermined minimum threshold, the most recent tire slip estimation 70 from the slip estimator 64 is used as the reference slip value 92. When the tire load 114 is above the predetermined minimum threshold, a prior tire slip estimation 70 that was used as the reference slip value 92 is retained as the reference slip value. When the tire wear state 116 is below a predetermined minimum threshold, the most recent tire slip estimation 70 from the slip estimator 64 is used as the reference slip value 92. When the tire wear state 116 is above the predetermined minimum threshold, a prior tire slip estimation 70 that was used as the reference slip value 92 is retained as the reference slip value. If the position 118 of the tire 14 is consistent with a previously indicated position, the most recent tire slip estimation 70 from the slip estimator 64 is used as the reference slip value 92. If the position 118 of the tire 14 is consistent with the previously indicated position, a prior tire slip estimation 70 that was used as the reference slip value 92 is retained as the reference slip value.

The reference slip calculator 88 thus determines and outputs an optimum reference slip value 92. The optimum reference slip value 92 is input into the relative slip calculator 90 along with the above-described the slip estimation 70 from the slip estimator 64. The relative slip calculator 90 compares the slip estimation 70 from the slip estimator 64 and the optimum reference slip value 92 to determine a relative change in tire slip 120.

When the slip characteristic of the tire 14 is the relative change in tire slip 120, the classifier 72 receives the relative change in tire slip to identify the road surface condition 74. In such a case, the classifier 72 identifies the road surface condition 74 based on the magnitude of the relative change in tire slip 120. As described above, the classifier 72 preferably employs a multinomial logistic regression classification methodology, such as a softmax regression, to identify the road surface condition 74. The road surface condition 74 identified by the classifier 72 preferably is output according to road surface type, such as a dry surface 76, wet surface 78, snow-covered surface 80, icy surface 82, and/or variations and combinations thereof.

As described above, the road surface condition 74 may be output from the road condition monitoring system 10 and input through the CAN bus system 28 into vehicle control systems and/or into other discrete estimation systems 84. For example, the road surface condition 74 may be input into the above-described tire grip estimation system. The vehicle control systems may include brake control systems, suspension control systems, steering control systems, and the like. Such vehicle control systems may be employed on any vehicle, including driver-operated vehicles, driver-assisted vehicles, and autonomous vehicles.

With reference to Figure 3, the road condition monitoring system 10 may be stored on a local, vehicle-mounted processor 32 or on a remote Internet or cloud-based processor 46, with wireless data transmission 122 between the vehicle 12 and the cloud-based processor. The road surface condition 74 may also be wirelessly transmitted 124 from the cloud-based processor 46 to a display device 126 for a display that is accessible to a user of the vehicle 12, such as a smartphone, or to a fleet manager. Alternatively, the road surface condition 74 may be wirelessly transmitted 128 from the vehicle CAN bus 28 to the display device 126.

In this manner, the road condition monitoring system 10 identifies free rolling conditions of a tire 14 and accurately and reliably estimates the slip of the tire during the free rolling conditions in an economical manner, which in turn enables estimation of a road surface condition 74 in real time. The road condition monitoring system 10 determines the road surface condition 74 with an indirect technique, which employs standard vehicle sensors to capture local slip behavior of each tire 14 during the free rolling conditions. In addition, the road condition monitoring system 10 is tire agnostic, and thus provides a robust and accurate system even when different tires 14 are mounted on the vehicle 12.

The present invention also includes a method for estimating a road surface condition 74 over which a vehicle 12 travels. The method includes steps in accordance with the description that is presented above and shown in Figures 1 through 8.

It is to be understood that the structure of the above-described road condition estimation system 10 and the steps of the accompanying method may be modified within the scope of the invention, as defined by the appended claims. For example, electronic communication may be through a wired connection or wireless communication without affecting the overall concept or operation of the invention. Such wireless communications may include radio frequency (RF) and Bluetooth® communications. In addition, vehicle and tire characteristics other than those described above and known to those skilled in the art may be employed, without affecting the overall concept or operation of the invention. Moreover, while examples of statistical analysis techniques are provided above, any applicable technique known to those skilled in the art may be employed without affecting the overall concept or operation of the invention.

## Claims

1. A road condition monitoring system for a vehicle, the vehicle (12) being supported by at least one tire (14) and including a central communication system (28), the system (10) comprising:

a processor (32) in electronic communication with the central communication system (28);

an identifier (42) in electronic communication with the processor (32), the identifier (42) being configured for receiving vehicle condition data from the central communication system (28) and identifying a free rolling instance of the at least one tire (14);

a slip estimator (64) in electronic communication with the processor (32), the slip estimator (64) being configured for receiving speed data from the central communication system (28) and determining slip characteristics of the at least one tire (14) during the free rolling instance, wherein the speed data received by the slip estimator (64) includes a vehicle reference speed and a wheel speed, and wherein the slip estimator (64) is configured to estimate a slip of the at least one tire (14) as a percentage difference between the vehicle reference speed and the wheel speed; and

a classifier (72) in electronic communication with the processor (32), the classifier (72) being configured for receiving the slip characteristics of the at least one tire (14) and identifying a road surface condition from the slip characteristics.

2. The system of claim 1, wherein the slip characteristics include a magnitude of an estimated slip of the at least one tire (14) during the free rolling instance.

3. The system of claim 1 or 2, further comprising a slip adjustor (86), the slip adjustor (86) being configured for estimating a relative change in slip of the at least one tire (14) during the free rolling instance, wherein the slip characteristics include the relative change in slip of the at least one tire (14), and, optionally, wherein the classifier (72) is configured for identifying the road surface condition from a magnitude of the relative change in slip of the at least one tire (14).

4. The system of claim 3, wherein the slip adjustor (86) includes a reference slip calculator (88), the reference slip calculator (88) being configured for receiving vehicle atmospheric condition data from the central communication system (28) and for estimating a reference slip value of the at least one tire (14) during the free rolling instance, and, optionally, wherein the atmospheric condition data includes an ambient temperature and a relative humidity.

5. The system of claim 4, further comprising a dry road condition estimator (100) being configured for analyzing the atmospheric condition data to determine if a road on which the vehicle (12) is traveling is dry by generating a probability of road dryness.

6. The system of claim 4 or 5, wherein the reference slip calculator (88) is configured for receiving a vehicle speed and tire-related data to estimate the reference slip value of the at least one tire (14) during the free rolling instance, and, optionally, wherein the tire-related data includes at least one of a pressure of the at least one tire (14), a load on the at least one tire (14), a wear state of the at least one tire (14), and a position of the at least one tire (14) on the vehicle (12).

7. The system of claim 4, 5 or 6, wherein the slip adjustor (86) includes a relative slip calculator (90), the relative slip calculator (90) being configured for receiving the reference slip value and a slip estimation from the slip estimator (64), and the relative slip calculator (90) being further configured for determining the relative change in slip of the at least one tire (14) from the reference slip value and the slip estimation.

8. The system of at least one of the previous claims, wherein the classifier (72) is configured to employ a multinomial logistic regression classification to identify the road surface condition; and/or wherein the road surface condition identified by the classifier (72) is according to road surface type, including at least one of a dry surface, a wet surface, a snow-covered surface, and an icy surface.

9. The system of at least one of the previous claims, wherein the vehicle condition data received by the identifier (42) includes a vehicle reference speed, a vehicle longitudinal acceleration, a steering wheel angle, a brake pedal command, and a gas pedal position.

10. The system of at least one of the previous claims, wherein the identifier (42) includes a threshold based event classifier (60), including at least one of a linear classifier, a nonlinear classifier, and a Bayesian statistical classifier.

11. The system of at least one of the previous claims, wherein the vehicle condition data are categorized by each respective vehicle condition, with predetermined thresholds are set for each vehicle condition, and when the predetermined thresholds are met, a free rolling instance of the at least one tire is identified.

12. The system of at least one of the previous claims, wherein the slip estimator (64) is configured to employ a recursive least squares algorithm with a forgetting factor.

13. The system of at least one of the previous claims, wherein the system (10) is configured to output the road surface condition identified by the classifier (72) from the road condition monitoring system (10) to at least one of a vehicle control system and a discrete estimation system (84), the discrete estimation system (84) preferably including a tire grip estimation system.

14. A method of road condition monitoring for a vehicle, the vehicle (12) being supported by at least one tire (14) and including a central communication system (28), the method comprising:

providing a processor (32) in electronic communication with the central communication system (28);
providing an identifier (42) in electronic communication with the processor (32), the identifier (42) receiving vehicle condition data from the central communication system (28) and identifying a free rolling instance of the at least one tire (14);
providing a slip estimator (64) in electronic communication with the processor (32), the slip estimator (64) receiving speed data from the central communication system (28) and determining slip characteristics of the at least one tire (14) during the free rolling instance, wherein the speed data received by the slip estimator (64) includes a vehicle reference speed and a wheel speed, and wherein the slip estimator (64) estimates a slip of the at least one tire (14) as a percentage difference between the vehicle reference speed and the wheel speed; and
providing a classifier (72) in electronic communication with the processor (32), the classifier (72) receiving the slip characteristics of the at least one tire (14) and identifying a road surface condition from the slip characteristics.

**Patentansprüche**

1. System zur Straßenzustandsüberwachung für ein Fahrzeug, wobei das Fahrzeug (12) von mindestens einem Luftreifen (14) getragen wird und ein zentrales Kommunikationssystem (28) umfasst, wobei das System (10) das Folgende umfasst:

einen Prozessor (32), der elektronisch mit dem zentralen Kommunikationssystem (28) in Verbindung gebracht wird;
eine Vorrichtung zur Identifikation (42), die elektronisch mit dem Prozessor (32) in Verbindung gebracht wird, wobei die Vorrichtung zur Identifikation (42) so konfiguriert ist, dass sie Daten, die sich auf den Zustand des Fahrzeugs beziehen, von dem zentralen Kommunikationssystem (28) empfängt und einen Fall von Freilauf des mindestens einen Luftreifens (14) identifiziert;
eine Vorrichtung zur Schlupfschätzung (64), die elektronisch mit dem Prozessor (32) in Verbindung gebracht wird, wobei die Vorrichtung zur Schlupfschätzung (64) so konfiguriert ist, dass sie geschwindigkeitsbezogene Daten von dem zentralen Kommunikationssystem (28) empfängt und Schlupfeigenschaften des mindestens einen Luftreifens (14) im Fall einer Freilaufbewegung bestimmt, wobei die geschwindigkeitsbezogenen Daten, die von der Vorrichtung zur Schlupfschätzung (64) empfangen werden, eine Fahrzeugreferenzgeschwindigkeit und eine Radgeschwindigkeit beinhalten; und wobei die Vorrichtung zur Schlupfschätzung (64) so konfiguriert ist, das sie einen Schlupf des mindestens einen Luftreifens (14) in der Form einer prozentualen Differenz zwischen der Fahrzeugreferenzgeschwindigkeit und der Radgeschwindigkeit schätzt; und
eine Vorrichtung zur Klassifizierung (72), die elektronisch mit dem Prozessor (32) in Verbindung gebracht wird, wobei die Vorrichtung zur Klassifizierung (72) so konfiguriert ist, dass sie Daten empfängt, die sich auf den Schlupf des mindestens einen Luftreifens (14) beziehen, und den Zustand der Straßenoberfläche aus den Schlupfeigenschaften identifiziert.

2. System nach Anspruch 1, wobei die Schlupfeigenschaften eine Größe eines geschätzten Schlupfs des mindestens einen Luftreifens (14) bei einer Freilaufbewegung umfassen.

3. System nach Anspruch 1 oder 2, das ferner eine Vorrichtung zur Schlupfeinstellung (86) umfasst, wobei die Vorrichtung zur Schlupfeinstellung (86) so konfiguriert ist, dass sie eine relative Änderung in Bezug auf den Schlupf des mindestens einen Luftreifens (14) im Fall einer Freilaufbewegung abschätzt; wobei die Schlupfeigenschaften die relative Änderung in Bezug auf den Schlupf des mindestens einen Luftreifens (14) umfassen, und optional, wobei die Vorrichtung zur Klassifizierung (72) so konfiguriert ist, dass sie den Zustand der Straßenoberfläche aus einer Größe der relativen Änderung in Bezug auf den Schlupf des mindestens einen Luftreifens (14) identifiziert.

**4.** System nach Anspruch 3, wobei die Vorrichtung zur Schlupfeinstellung (86) eine Vorrichtung zur Referenzschlupfberechnung (88) umfasst, wobei die Vorrichtung zur Referenzschlupfberechnung (88) so konfiguriert ist, dass sie Daten, die sich auf die atmosphärischen Bedingungen des Fahrzeugs beziehen, von dem zentralen Kommunikationssystem (28) empfängt und einen Referenzschlupfwert des mindestens einen Luftreifens (14) im Fall einer Freilaufbewegung schätzt, wobei optional die Daten, die sich auf die Witterungsbedingungen beziehen, eine Umgebungstemperatur und eine relative Luftfeuchtigkeit umfassen.

**5.** System nach Anspruch 1 oder 2, das ferner eine Vorrichtung (100) zum Schätzen eines trockenen Straßenzustands umfasst, die so konfiguriert ist, dass sie Daten analysiert, die sich auf die atmosphärischen Bedingungen beziehen, um durch Erzeugen einer Wahrscheinlichkeit für eine trockene Straße zu bestimmen, ob eine Straße, auf der das Fahrzeug (12) fährt, trocken ist.

**6.** System nach Anspruch 4 oder 5, wobei die Vorrichtung der Referenzschlupfberechnung (88) so konfiguriert ist, dass sie die geschwindigkeitsbezogene und fahrzeugbezogene Daten empfängt, um den Referenzschlupfwert des mindestens einen Luftreifens (14) im Fall einer Freilaufbewegung zu schätzen, und optional, wobei die reifenbezogenen Daten mindestens einen Druck des mindestens einen Reifens (14), eine Belastung des mindestens einen Reifens (14), einen Verschleißzustand des mindestens einen Reifens (14) und eine Position des mindestens einen Reifens (14) an dem Fahrzeug (12) umfassen.

**7.** System nach Anspruch 4, 5 oder 6, wobei die Vorrichtung zur Schlupfeinstellung (86) eine Vorrichtung zur relativen Schlupfberechnung (90) umfasst, die so konfiguriert ist, dass sie den Referenzschlupfwert und eine Schlupfschätzung von der Vorrichtung zur Schlupfschätzung (64) empfängt, und die Vorrichtung zur relativen Schlupfberechnung (90) ferner so konfiguriert ist, dass sie die relative Änderung in Bezug auf das Rutschen des mindestens einen Luftreifens (14) aus dem Referenzschlupfwert und der Schlupfschätzung bestimmt.

**8.** System nach mindestens einem der vorhergehenden Ansprüche, wobei die Vorrichtung zur Klassifizierung (72) so konfiguriert ist, dass sie eine multinomiale logistische Regressionsklassifizierung verwendet, um den Zustand der Straßenoberfläche zu identifizieren; und/oder wobei der Zustand der Straßenoberfläche, der durch die Vorrichtung zur Klassifizierung (72) identifiziert wurde, sich auf einen Typ der Straßenoberfläche bezieht, einschließlich mindestens einer Oberfläche, die ausgewählt ist aus einer trockenen Oberfläche, einer nassen Oberfläche, einer schneebedeckten Oberfläche und einer gefrorenen Oberfläche.

**9.** System nach mindestens einem der vorhergehenden Ansprüche, wobei die von der Vorrichtung zur Identifikation (42) empfangenen Fahrzeugzustandsdaten eine Referenzgeschwindigkeit des Fahrzeugs, eine Fahrzeugbeschleunigung in Längsrichtung, einen vom Lenkrad gebildeten Winkel, eine Bremspedalbetätigung und eine Gaspedalstellung umfassen.

**10.** System nach mindestens einem der vorhergehenden Ansprüche, wobei die Vorrichtung zur Identifikation (42) eine schwellenwertbasierte Vorrichtung zur Klassifizierung (60) umfasst, die mindestens eine Vorrichtung zur Klassifizierung umfasst, die aus einer linearen Vorrichtung zur Klassifizierung, einer nichtlinearen Vorrichtung zur Klassifizierung und einer auf einer Bayes'schen Statistik basierenden Vorrichtung zur Klassifizierung ausgewählt ist.

**11.** System nach mindestens einem der vorhergehenden Ansprüche, wobei die Daten, die den Zustand des Fahrzeugs betreffen, durch jeden jeweiligen Zustand des Fahrzeugs kategorisiert werden; wobei vorbestimmte Schwellenwerte für jeden Zustand des Fahrzeugs festgelegt werden; und wenn die Schwellenwerte, die vorbestimmt wurden, erreicht werden, ein Fall von Freilauf des mindestens einen Luftreifens identifiziert wird.

**12.** System nach mindestens einem der vorhergehenden Ansprüche, wobei die Vorrichtung zur Schlupfschätzung (64) so konfiguriert ist, dass sie einen rekursiven Algorithmus der kleinsten Quadrate mit einem Vergessensfaktor verwendet.

**13.** System nach mindestens einem der vorhergehenden Ansprüche, wobei das System (10) so konfiguriert ist, das es den Zustand der Straßenoberfläche, der durch die Vorrichtung zur Klassifizierung (72) von dem System zur Straßenzustandsüberwachung (10) identifiziert wurde, zur Angabe an das mindestens eine System, das aus einem Fahrzeugsteuerungssystem und einem diskreten Schätzsystem (84) ausgewählt ist, wobei das diskrete Schätzsystem (84) vorzugsweise ein System zur Schätzung der Haftung des Luftreifens umfasst.

**14.** Verfahren zur Überwachung des Straßenzustands für ein Fahrzeug, wobei das Fahrzeug (12) von mindestens einem Luftreifen (14) getragen wird und ein zentrales Kommunikationssystem (28) umfasst, wobei das Verfahren das Folgende umfasst:

das Vorsehen eines Prozessors (32), der elektronisch mit dem zentralen Kommunikationssystem (28) in Verbindung gebracht wird;

das Vorsehen einer Vorrichtung zur Identifikation (42), die elektronisch mit dem Prozessor (32) in Verbindung gebracht wird, wobei die Vorrichtung zur Identifikation (42) Daten, die den Zustand des Fahrzeugs betreffen, von dem zentralen Kommunikationssystem (28) empfängt und einen Fall des Ausrollens des mindestens einen Luftreifens (14) identifiziert;

das Vorsehen einer Vorrichtung zur Schlupfschätzung (64), die elektronisch mit dem Prozessor (32) in Verbindung gebracht wird, wobei die Vorrichtung zur Schlupfschätzung (64) Geschwindigkeitsdaten von dem zentralen Kommunikationssystem (28) empfängt und Schlupfeigenschaften des mindestens einen Luftreifens (14) in dem Fall bestimmt, der mit einer Freilaufbewegung verbunden ist; wobei die Geschwindigkeitsdaten, die von der Vorrichtung zur Schlupfschätzung (64) empfangen werden, eine Fahrzeugreferenzgeschwindigkeit und eine Radgeschwindigkeit umfassen; und wobei die Vorrichtung zur Schlupfschätzung (64) einen Schlupf des mindestens einen Luftreifens (14) in der Form einer prozentualen Differenz zwischen der Fahrzeugreferenzgeschwindigkeit und der Radgeschwindigkeit schätzt; und

das Vorsehen einer Vorrichtung zur Klassifizierung (72), die elektronisch mit dem Prozessor (32) in Verbindung gebracht wird, wobei die Vorrichtung zur Klassifizierung (72) die Schlupfeigenschaften des mindestens einen Luftreifens (14) empfängt und einen Zustand der Straßenoberfläche aus den Schlupfeigenschaften identifiziert.

**Revendications**

1. Système de surveillance de l'état de la route, destiné à un véhicule, le véhicule (12) étant supporté par au moins un bandage pneumatique (14) et englobant un système central de communication (28), le système (10) comprenant :

un processeur (32) qui est mis en communication par voie électronique avec le système central de communication (28) ;

un dispositif d'identification (42) qui est mis en communication par voie électronique avec le processeur (32), le dispositif d'identification (42) étant configuré pour recevoir des données qui concernent l'état du véhicule à partir du système central de communication (28) et pour identifier un cas de déplacement en roue libre dudit au moins un bandage pneumatique (14) ;

un dispositif d'estimation du patinage (64) qui est mis en communication par voie électronique avec le processeur (32), le dispositif d'estimation du patinage (64) étant configuré pour recevoir des données qui concernent la vitesse à partir du système central de communication (28) et pour déterminer des caractéristiques de patinage dudit au moins un bandage pneumatique (14) dans le cas d'un déplacement en roue libre, dans lequel les données concernant la vitesse qui sont reçues par le dispositif d'estimation du patinage (64) englobent une vitesse de référence du véhicule et une vitesse de roue ; et dans lequel le dispositif d'estimation du patinage (64) est configuré pour estimer un patinage d'au moins un bandage pneumatique (14) sous la forme d'une différence en pourcentage entre la vitesse de référence du véhicule et la vitesse de roue ; et

un dispositif de classification (72) qui est mis en communication par voie électronique avec le processeur (32), le dispositif de classification (72) étant configuré pour recevoir les données qui concernent le patinage dudit au moins un bandage pneumatique (14) et pour identifier l'état de la surface de la route à partir des caractéristiques du patinage.

2. Système selon la revendication 1, dans lequel les caractéristiques du patinage englobent une grandeur d'un patinage estimé dudit au moins un bandage pneumatique (14) dans le cas d'un déplacement en roue libre.

3. Système selon la revendication 1 ou 2, qui comprend en outre un dispositif d'ajustement du patinage (86), le dispositif d'ajustement du patinage (86) étant configuré pour estimer un changement relatif en ce qui concerne le patinage dudit au moins un bandage pneumatique (14) dans le cas d'un déplacement en roue libre ; dans lequel les caractéristiques du patinage englobent le changement relatif en ce qui concerne le patinage dudit au moins un bandage pneumatique (14), et, de manière facultative, dans lequel le dispositif de classification (72) est configuré pour identifier l'état de la surface de la route à partir d'une grandeur du changement relatif en ce qui concerne le patinage dudit au moins un bandage pneumatique (14).

4. Système selon la revendication 3, dans lequel le dispositif d'ajustement du patinage (86) englobe un dispositif de calcul du patinage de référence (88), le dispositif de calcul du patinage de référence (88) étant configuré pour recevoir des données qui concernent les conditions atmosphériques du véhicule, à partir du système central de communication (28) et pour estimer une valeur de patinage de référence dudit au moins un bandage pneumatique (14) dans le cas d'un déplacement en roue libre, et, de manière facultative, dans lequel des données qui concernent les conditions atmosphériques englobent une température ambiante et une humidité relative.

5. Système selon la revendication 1 ou 2, qui comprend en outre un dispositif d'estimation d'un état sec de la route (100) qui est configuré pour analyser des données qui concernent les conditions atmosphériques afin de déterminer le fait de savoir si une route sur laquelle se déplace le véhicule (12) est sèche par l'intermédiaire de la génération d'une probabilité de sécheresse de la route.

6. Système selon la revendication 4 ou 5, dans lequel le dispositif de calcul du patinage de référence (88) est configuré pour recevoir des données concernant la vitesse et liées au véhicule afin d'estimer la valeur de patinage de référence dudit au moins un bandage pneumatique (14) dans le cas d'un déplacement en roue libre, et, de manière facultative, dans lequel les données liées au bandage pneumatique englobent au moins une donnée choisie parmi une pression dudit au moins un bandage pneumatique (14), une charge dudit au moins un bandage pneumatique (14), un état d'usure dudit au moins un bandage pneumatique (14), et une position dudit au moins un bandage pneumatique (14) sur le véhicule (12).

7. Système selon la revendication 4, 5 ou 6, dans lequel le dispositif d'ajustement du patinage (86) englobe un dispositif de calcul du patinage relatif (90) qui est configuré pour recevoir la valeur du patinage de référence et une estimation du patinage à partir du dispositif d'estimation du patinage (64), et le dispositif de calcul du patinage relatif (90) est en outre configuré pour déterminer le changement relatif en ce qui concerne le dérapage dudit au moins un bandage pneumatique (14) à partir de la valeur du patinage de référence et de l'estimation du patinage.

8. Système selon au moins une des revendications précédentes, dans lequel le dispositif de classification (72) est configuré pour utiliser une classification par régression logistique multinomiale afin d'identifier l'état de la surface de la route ; et/ou dans lequel l'état de la surface de la route qui a été identifié par le dispositif de classification (72) se réfère à un type de surface de la route, y compris au moins une surface qui est choisie parmi une surface sèche, une surface humide, une surface recouverte de neige et une surface gelée.

9. Système selon au moins une des revendications précédentes, dans lequel les données qui concernent l'état du véhicule, reçues par le dispositif d'identification (42) englobent une vitesse de référence du véhicule, une accélération du véhicule dans la direction longitudinale, un angle formé par le volant de direction, une commande de la pédale de frein et une position de la pédale d'accélérateur.

10. Système selon au moins une des revendications précédentes, dans lequel le dispositif d'identification (42) englobent un dispositif de classification d'événements (60) se basant sur un seuil, qui englobe au moins un dispositif de classification choisi parmi un dispositif de classification linéaire, un dispositif de classification non linéaire et un dispositif de classification basé sur une statistique bayésienne.

11. Système selon au moins une des revendications précédentes, dans lequel les données qui concernent l'état du véhicule sont catégorisées par chaque état respectif du véhicule ; dans lequel des seuils prédéterminés sont établis pour chaque état du véhicule ; et lorsque les seuils qui ont été prédéterminés sont rencontrés, un cas de déplacement en roue libre dudit au moins un bandage pneumatique est identifié.

12. Système selon au moins une des revendications précédentes, dans lequel le dispositif d'estimation du patinage (64) est configuré pour utiliser un algorithme récursif des moindres carrés comprenant un facteur d'oubli.

13. Système selon au moins une des revendications précédentes, dans lequel le système (10) est configuré pour transmettre l'état de la surface de la route qui a été identifié par le dispositif de classification (72) à partir du système de surveillance de l'état de la route (10) audit au moins un système qui est choisi parmi un système de commande du véhicule et un système d'estimation discret (84), le système d'estimation discret (84) englobant de préférence un système d'estimation de l'adhérence du bandage pneumatique.

14. Procédé de surveillance de l'état de la route destiné à un véhicule, le véhicule (12) étant supporté par au moins un bandage pneumatique (14) et englobant un système central de communication (28), le procédé comprenant le fait de :

procurer un processeur (32) qui est mis en communication par voie électronique avec le système central de communication (28) ;

procurer un dispositif d'identification (42) qui est mis en communication par voie électronique avec le processeur (32), le dispositif d'identification (42) recevant des données qui concernent l'état du véhicule à partir du système central de communication (28) et identifiant un cas de déplacement en roue libre dudit au moins un bandage pneumatique (14) ;

procurer un dispositif d'estimation du patinage (64) qui est mis en communication par voie électronique avec le processeur (32), le dispositif d'estimation du patinage (64) recevant des données concernant la vitesse à partir du système central de communication (28) et déterminant des caractéristiques de patinage dudit au moins un bandage pneumatique (14) au cours du cas lié à un déplacement en roue libre ; dans lequel les données concernant la vitesse qui sont reçues par le dispositif d'estimation du patinage (64) englobent une vitesse de référence du véhicule et une vitesse de roue ; et dans lequel le dispositif d'estimation du patinage (64) estime un patinage dudit au moins un bandage pneumatique (14) sous la forme d'une différence en pourcentage entre la vitesse de référence du véhicule et la vitesse de roue ; et

procurer un dispositif de classification (72) qui est mis en communication par voie électronique avec le processeur (32), le dispositif de classification (72) recevant les caractéristiques de patinage dudit au moins bandage pneumatique (14) et identifiant un état de la surface de la route à partir des caractéristiques de patinage.

# FIGURE 1

**FIGURE 2**

FIGURE 3

Tire force curve

FIGURE 4

EP 4 140 838 B1

**IDENTIFY INSTANCES WHEN THE TIRE IS IN A "FREE ROLLING" STATE**
Algorithm used: Threshold Based Event Classifier

52 50 48 44

- Reference vehicle speed: e.g. (GPS Speed)
- Vehicle Longitudinal Acceleration (Ax)
- Steering Wheel Angle (SWA)
- Brake Pedal Command (BPC)
- Gas Pedal Position (GPP)

56 54

- Reference vehicle speed: e.g. (GPS Speed)
- Wheel Speed (WS)

48 68 66

32, 46 42 60 62 64

**ESTIMATE TIRE SLIP DURING THOSE INSTANCES**
Algorithm used: Recursive Least Squares With Forgetting Factor

70 72 74

**Classification Algorithm**

(SoftMax regression)

**Road Surface Type**

- Dry — 76
- Wet — 78
- Snow — 80
- Ice — 82

84

10

**FIGURE 5**

EP 4 140 838 B1

*Inputs from vehicle sensors* — 94

**Ambient Temperature Relative Humidity** — 96, 98

88

32, 46

**Maximum likelihood estimator for the road condition to be dry** — 100

104

Probability (p) that the road condition is dry — 106

102

96

98

108

Perform this check at the start of a trip

**If road condition is dry (p>0.95), update the reference value of tire slip**

**Else** continue using previously stored value of the reference tire slip

92

10

**FIGURE 6**

FIGURE 7

**IDENTIFY INSTANCES WHEN THE TIRE IS IN A "FREE ROLLING" STATE**
Algorithm used: Threshold Based Event Classifier — 42

- Reference vehicle speed; e.g. (GPS Speed) — 44
- Vehicle Longitudinal Acceleration (Ax)
- Steering Wheel Angle (SWA)
- Brake Pedal Command (BPC)
- Gas Pedal Position (GPP)

62

66

**ESTIMATE TIRE SLIP DURING THOSE INSTANCES**
Algorithm used: Recursive Least Squares With Forgetting Factor — 64

- Reference vehicle speed: e.g. (GPS Speed)
- Wheel Speed (WS)

70

70

86

88 — Reference Tire Slip

Reference Tire Slip Calculator

Mute Tire Slip

Reference Tire Slip — 92

+ / − — 90

Relative Tire Slip

94

Ambient Temperature
Relative Humidity — 96

98

- Vehicle Speed — 48
- Tire Inflation Pressure (from TPMS) — 112
- Tire Load (from FPL based load algo) — 114
- Tire Wear State (from FPL based algo) — 118
- Tire position — 116

110

10

120

72

Classification
Algorithm
(SoftMax regression)

74

**Road Surface Type**

- Dry — 76
- Wet — 78
- Snow — 80
- Ice — 82

84

32, 46

**FIGURE 8**

20

**EP 4 140 838 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014199328 A1
- US 20210229670
- US 10245906 B
- US 20210061022 A1
- US 20220230481 A1